# EUROPEAN PATENT APPLICATION

(11) **EP 3 808 956 A1**
(43) Date of publication of application: **21.04.2021**
(21) Application number: 19215412.8
(22) Date of filing: 11.12.2019
(51) Int. Cl.: F02C 3/10, F01D 15/10

(54) **HYBRID GAS TURBINE ENGINE/GENERATOR ARRANGEMENTS**

(30) Priority: 18.10.2019 US 201916657431
(71) Applicant: Hamilton Sundstrand Corporation, Charlotte, NC 28217-4578 (US)
(72) Inventor: VEILLEUX, Leo J., Wethersfield, CT Connecticut 06109 (US); RIBAROV, Lubomir A., West Hartford, CT Connecticut 06107 (US)
(74) Representative: Dehns

(57) **Abstract**

A gas turbine engine/generator arrangement including a generator (102), a low-pressure spool (104) operably connected to the generator, a high-pressure spool (106) operably connected to the low-pressure spool, and an electric motor (108). The electric motor is mechanically connected to the high-pressure spool and is electrically connected to the generator to communicate mechanical rotation between the electric motor and the high-pressure spool. Auxiliary power units and methods of generating electric power are also described.

## Description

### BACKGROUND

The present disclosure generally relates to gas turbine engines, and more particularly to gas turbine engines having integrated generators.

Gas turbine engine-driven generators, such as integrated auxiliary power unit generators on aircraft, can be subject to fluctuation in the electrical load connected to the generator. Although gas turbine engines are generally able to rapidly change the mechanical power provided by the gas turbine engine, some gas turbine engines can be unable to respond to fast transient changes in electrical load, e.g., changes in electrical load that appear in seconds. In such applications energy storage devices like batteries and flywheels can be coupled to the gas turbine engine to compensate for short-period fluctuations. The output power of some gas turbine engines can also decrease in response to high ambient temperature, decreasing power available to the integrated generator in the event of increase in ambient temperature or ambient altitude.

Such systems and methods have generally been acceptable for their intended purpose. However, there remains a need for improved gas turbine engine/generator arrangements, auxiliary power units, and methods of generating electrical power.

### BRIEF DESCRIPTION

A gas turbine engine/generator arrangement is provided. The gas turbine engine/generator arrangement includes a generator, a low-pressure spool operably connected to the generator, a high-pressure spool operably connected to the low-pressure spool, and an electric motor. The electric motor is mechanically connected to the high-pressure spool and is electrically connected to the generator to communicate mechanical rotation between the electric motor and the high-pressure spool in response to transient change in an electrical load connected to the generator.

In addition to one or more of the features described above, or as an alternative, further examples of the gas turbine engine/generator arrangement may include that the generator is an alternating current power generator.

In addition to one or more of the features described above, or as an alternative, further examples of the gas turbine engine/generator arrangement may include that the generator is a 400 hertz alternating current power generator.

In addition to one or more of the features described above, or as an alternative, further examples of the gas turbine engine/generator arrangement may include that the high-pressure spool has an air compressor and that the electric motor is fixed in rotation relative to the air compressor.

In addition to one or more of the features described above, or as an alternative, further examples of the gas turbine engine/generator arrangement may include that the high-pressure spool has a compressor turbine and that the compressor turbine is fixed in rotation relative to the air compressor.

In addition to one or more of the features described above, or as an alternative, further examples of the gas turbine engine/generator arrangement may include a combustor fluidly coupling the air compressor to the compressor turbine.

In addition to one or more of the features described above, or as an alternative, further examples of the gas turbine engine/generator arrangement may include that the low-pressure spool has a power turbine and that the power turbine fixed in rotation relative to the generator.

In addition to one or more of the features described above, or as an alternative, further examples of the gas turbine engine/generator arrangement may include that the power turbine is supported for rotation relative to the low-pressure spool.

In addition to one or more of the features described above, or as an alternative, further examples of the gas turbine engine/generator arrangement may include a duct fluidly coupling the power turbine to the high-pressure spool.

In addition to one or more of the features described above, or as an alternative, further examples of the gas turbine engine/generator arrangement may include a variable-frequency constant-frequency power converter electrically connecting the generator to the electric motor.

In addition to one or more of the features described above, or as an alternative, further examples of the gas turbine engine/generator arrangement may include that the gas turbine/generator arrangement is an auxiliary power unit for an aircraft.

In addition to one or more of the features described above, or as an alternative, further examples of the gas turbine engine/generator arrangement may include that the electric motor is a synchronous electrical machine.

In addition to one or more of the features described above, or as an alternative, further examples of the gas turbine engine/generator arrangement may include that the electric motor is fixed in rotation relative to the high-pressure spool.

In addition to one or more of the features described above, or as an alternative, further examples of the gas turbine engine/generator arrangement may include a controller operably connected to the electric motor and responsive to instructions recorded on a memory to (a) rotate the high-pressure spool with the electric motor in response to increase in an electrical load on the generator, and (b) rotate the electric motor with the high-pressure spool in response to decrease in the electrical load on the generator.

In addition to one or more of the features described above, or as an alternative, further examples of the gas turbine engine/generator arrangement may include that the increase in the electrical load is a transient increase in the electrical load.

In addition to one or more of the features described above, or as an alternative, further examples of the gas turbine engine/generator arrangement may include that the decrease in the electrical load on the generator is a transient decrease in the electrical load.

In addition to one or more of the features described above, or as an alternative, further examples of the gas turbine engine/generator arrangement may include that the electric motor has an electric motor power rating, the gas turbine engine/generator arrangement has a gas turbine engine/generator arrangement power rating, and that the electric motor power rating is less than about 50% of the gas turbine engine/generator arrangement power rating.

In addition to one or more of the features described above, or as an alternative, further examples of the gas turbine engine/generator arrangement may include that the electric motor is fixed in rotation relative to the high-pressure spool, the gas turbine engine/generator arrangement also having a controller operably connected to the electric motor and responsive to instructions recorded a memory to (a) rotate the high-pressure spool with the electric motor in response to increase in an electrical load connecting to the generator, and (b) rotate the electric motor with the high-pressure spool in response to the decrease in the electrical load connected to the generator.

A method of generating electric power is also provided. The method includes, at a gas turbine engine/generator arrangement as described above, communicating rotation between the electric motor and the high-pressure spool in response to change in an electrical load connected to the generator.

In addition to one or more of the features described above, or as an alternative, further examples of the method may include rotating the high-pressure spool with the electric motor in response to an increase in an electrical load connected to the generator, the increase in the electrical load being a transient increase in the electrical load; and rotating the electric motor with the high-pressure spool in response to decrease in the electrical load connected to the generator, the decrease in the electrical load on the generator being a transient decrease in the electrical load.

Technical effects of the present disclosure include the capability to respond quickly to response to sudden fluctuations, e.g., fast transients, in electrical loads supplied by generators powered by gas turbine engine/generator arrangements. For example, the electric motor can add mechanical energy to the high-pressure spool by rotating the high-pressure spool in response to transient increases in electrical load on the generator powered by the high-pressure spool. The electric motor can also receive mechanical power from the high-pressure spool in response to transient decreases in electrical load on the generator powered by the low-pressure spool, storing the mechanical energy. In certain implementations the electric motor can also increase rotational speed of the high-pressure spool to compensate for decreased power output of the gas turbine engine, such as during operation at high ambient temperatures. It is also contemplated that the electric motor can also increase rotational speed of the high-pressure spool to compensate for decreased power output of the gas turbine engine, such as during operation at high ambient altitudes (i.e., with low ambient air pressures). In further the electric motor can increase rotational speed of the high-pressure spool to facilitate the acceleration and start (light-off) of the gas turbine engine, such as during operation at high ambient altitudes (i.e., with low ambient pressures).

### BRIEF DESCRIPTION OF THE DRAWINGS

The following descriptions should not be considered limiting in any way. With reference to the accompanying drawings, like elements are numbered alike:
FIG. 1 is a schematic view of a vehicle with a gas turbine engine/generator arrangement constructed in accordance with the present disclosure, showing the gas turbine engine/generator arrangement connected to electrical loads carried by the vehicle;
FIG. 2 is a schematic view of the gas turbine engine/generator arrangement of FIG. 1, showing a high-pressure spool with an electric motor, a low-pressure spool with a generator operatively associated therethrough with the high-pressure spool, and a power converter electrically connecting the generator to the electric motor;
FIG. 3 is a schematic view of the gas turbine engine/generator arrangement of FIG. 1, showing the electric motor rotating the high-pressure spool in response to a transient increase in electrical load on the generator;
FIG. 4 is a schematic view of the gas turbine engine/generator arrangement of FIG. 1, showing the high-pressure spool rotating the electric motor in response to a transient decrease in electrical load on the generator; and
FIG. 5 is a block diagram of a method of generating electric power with a gas turbine engine/generator arrangement, showing steps of the method according to an illustrative and non-limiting example implementation of the method.

### DETAILED DESCRIPTION

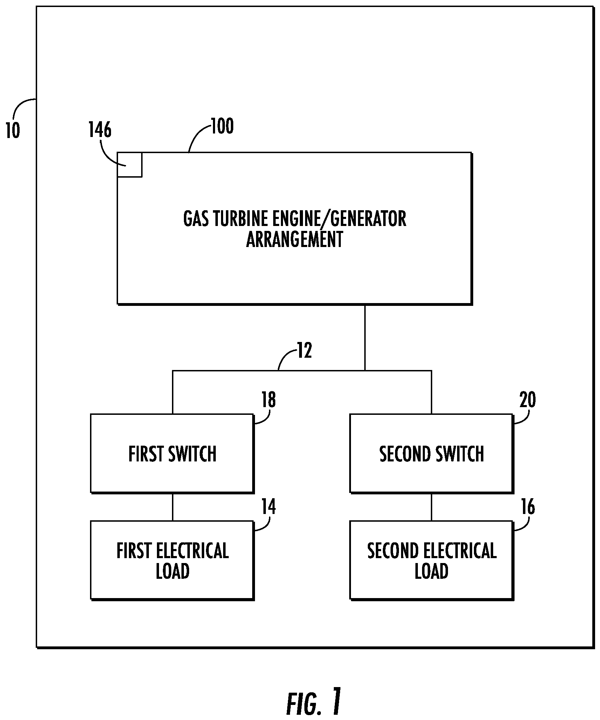

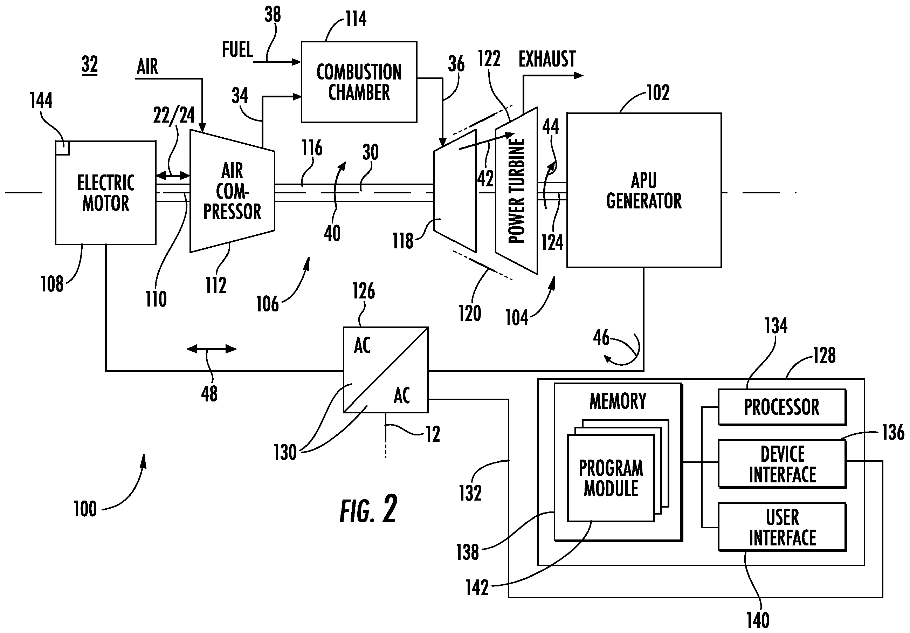

Reference will now be made to the drawings wherein like reference numerals identify similar structural features or aspects of the subject disclosure. For purposes of explanation and illustration, and not limitation, a partial view of an exemplary example of a gas turbine engine/generator arrangement in accordance with the disclosure is shown in FIG. 1 and is designated generally by reference character 100. Other examples of gas turbine engine/generator arrangements, auxiliary power units (APUs) having gas turbine engine/generator arrangements, and methods of generating electrical power in accordance with the present disclosure, or aspects thereof, are provided in FIGS. 2-5, as will be described. The systems and methods described herein can be used for generating electrical power in vehicles, such as in APUs in aircraft, though the present disclosure is not limited to APUs or to aircraft in general. Other applications for the gas turbine engine/generator arrangements described herein include turboshaft gas turbine engines, such as compact turboshaft gas turbine engines, employed to drive electrical loads like propulsors in more-electric aircraft architectures, more-electric engine architectures, hybrid-electric-mechanical architectures, and/or propulsion systems.

Referring to FIG. 1, a vehicle 10, e.g., an aircraft, is shown. The vehicle 10 includes an electrical system 12 with a first electrical load 14 and a second electrical load 16. The electrical system 12 also includes a first switch 18, a second switch 20, and the gas turbine engine/generator arrangement 100. In certain examples the gas turbine engine/generator arrangement 100 is an APU for an aircraft. Although the gas turbine engine/generator arrangement 100 is shown and described herein being carried by the vehicle 10, it is to be understood and appreciated that other types of mobile applications, like marine and submarine applications, as well as fixed terrestrial applications, can also benefit from the present disclosure.

The electrical system 12 connects the gas turbine engine/generator arrangement 100, and more specifically a generator 102 (shown in FIG. 2) operably associated with the gas turbine engine/generator arrangement 100, to the first switch 18 and the second switch 20. The first switch 18 couples the first electrical load 14 to the electrical system 12 and has an open position (or state) and a closed position (or state). The second switch 20 is similar to the first switch 18, has an open position (or state) and a closed position (or state), and additionally couples the second electrical load 16 to the electrical system 12.

In the closed position (or state) the first switch 18 electrically connects the first electrical load 14 to the generator 102 (shown in FIG. 2). In the open position (or state) the first switch 18 electrically separates the first electrical load 14 from the generator 102. When in the closed position (or state) the second switch 20 electrically connects the second electrical load 16 to the generator 102. When in the open position (or state) the second switch 20 electrically separates the second electrical load 16 from the generator 102.

As will be appreciated by those of skill in the art in view of the present disclosure, connecting an electrical load, e.g., either (or both) the first electrical load 14 and the second electrical load 16, to the generator 102 (shown in FIG. 2) increases the electrical load on the generator 102. The increased electrical load generally requires increase in fuel flow provided to the gas turbine engine/generator arrangement 100, conversion of the increased fuel flow into additional mechanical power, and communication of the additional mechanical power to the generator 102 to generate additional electrical power commensurate with the increased electrical load. Oppositely, disconnecting an electrical load, e.g., either (or both) the first electrical load 14 and the second electrical load 16, decreases the electrical load on the generator 102. The decreased electrical load allows the fuel flow provided to the gas turbine engine/generator arrangement 100 to be decreased, the gas turbine engine/generator arrangement 100 thereby ceasing generation mechanical power in excess of that required by the electrical load.

As will also be appreciated by those of skill in the art in view of the present disclosure, there can be delay between when the mechanical power requirement changes due to change in an electrical load and when the mechanical power output of the gas turbine engine powering the generator changes in response to an associated change in fuel flow. Although such delays are typically transient in duration, e.g., lasting seconds or minutes, the delay can result in power instability (during intervals when mechanical power to the generator is below that required by the electrical load) or engine inefficiency (during intervals when the gas turbine engine/generator arrangement provides mechanical power in excess of that required by the electrical load). To limit (or eliminate entirely) such instability and/or inefficiencies the gas turbine engine/generator arrangement 100, e.g., a hybrid gas turbine engine/generator arrangement, is provided.

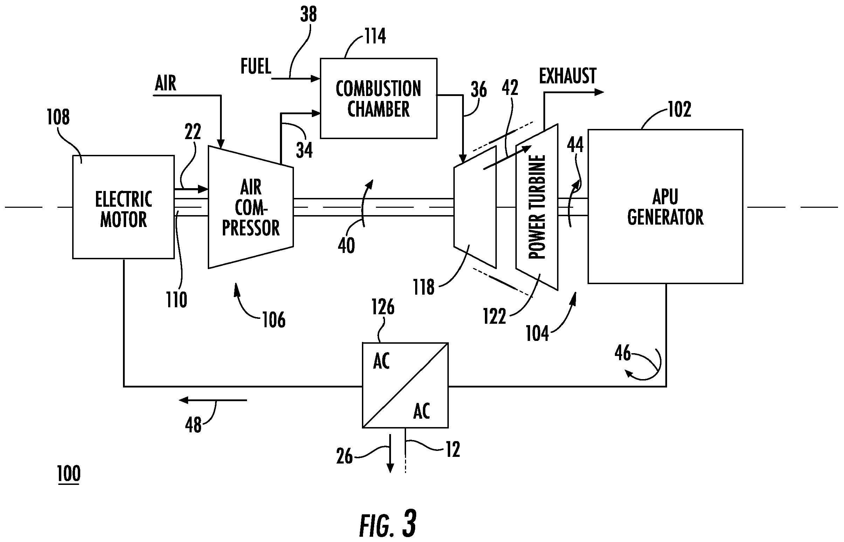

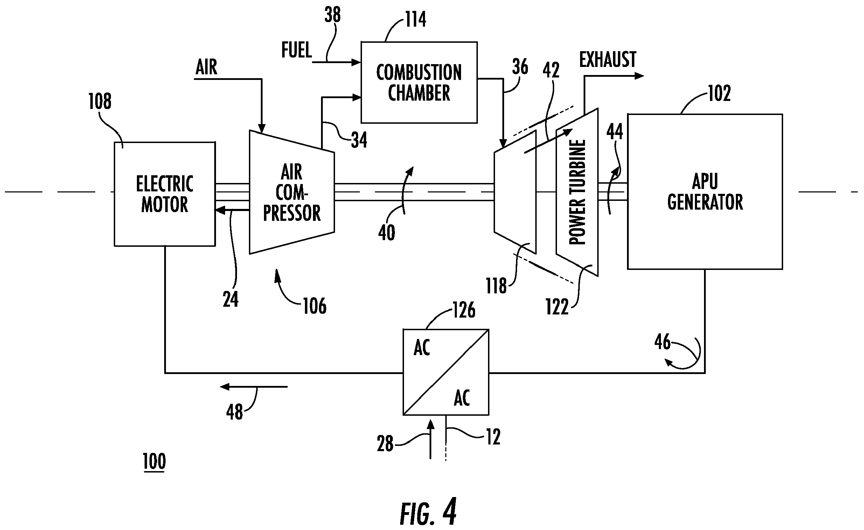

With reference to FIG. 2, the gas turbine engine/generator arrangement 100 is shown. The gas turbine engine/generator arrangement 100 includes the generator 102, a low-pressure spool 104 operably connected to the generator 102, a high-pressure spool 106 operably associated with the low-pressure spool 104, and an electric motor 108. The electric motor 108 is mechanically connected to the high-pressure spool 106. The electric motor 108 is also electrically connected to the generator 102 to communicate mechanical rotation, e.g., motor-to-spool rotation 22 and spool-to-motor rotation 24, between the electric motor 108 and the high-pressure spool 106 in response to change, e.g., an electrical load transient increase 26 (shown in FIG. 3) and an electrical load transient decrease 28 (shown in FIG. 4), in electrical load connected to the generator 102.

In the illustrated example the gas turbine engine/generator arrangement 100 includes the high-pressure spool 106, the low-pressure spool 104, a duct 120, a power converter 126, and a controller 128. The high-pressure spool 106 includes the electric motor 108, a motor shaft 110, and an air compressor 112. The high-pressure spool 106 also includes a combustor 114, a high-pressure shaft 116, and a compressor turbine 118. The low-pressure spool 104 includes a power turbine 122, a generator shaft 124, and the generator 102. Although a particular gas turbine engine arrangement is shown, e.g., a turboshaft gas turbine arrangement, it is to be understood and appreciated that other types of gas turbine engines can also benefit from the present disclosure.

The air compressor 112 is supported for rotation about a rotation axis 30 and is configured to compress air ingested from the external environment 32 to generate a compressed air flow 34. In this respect the air compressor 112 is connected to the compressor turbine 118 by the high-pressure shaft 116 and is operably associated with the compressor turbine 118 by the high-pressure shaft 116. The air compressor 112 is also in fluid communication with the combustor 114 to provide thereto the compressed air flow 34.

The combustor 114 is configured to generate a high-pressure combustion product flow 36 using the compressed air flow 34 and a fuel flow 38. In this respect the combustor is 114 is in fluid communication with the air compressor 112 to receive therefrom the compressed air flow 34. The combustor 114 is also in fluid communication with the compressor turbine 118 to provide thereto the high-pressure combustion product flow 36. During operation the combustor 114 combusts fuel received via the fuel flow 38 using the compressed air flow 34 to generate the high-pressure combustion product flow 36, which the combustor 114 communicates to the compressor turbine 118 as the high-pressure combustion product flow 36. In certain examples the combustor 114 fluidly couples the air compressor 112 to the low-pressure spool 104.

The compressor turbine 118 is configured to convert a portion of the energy communicated via the high-pressure combustion product flow 36 into high-pressure spool rotation 40. The compressor turbine 118 is also configured to communicate the high-pressure combustion product flow 36, once partially expanded, to the power turbine 122 as a partially expanded combustion product flow 42. In this respect the compressor turbine 118 is supported for rotation about the rotation axis 30 and is operably connected to the air compressor 112 by the high-pressure shaft 116. The compressor turbine 118 is also in fluid communication with the combustor 114 to receive therefrom the high-pressure combustion product flow 36. The compressor turbine 118 is additionally in fluid communication with the power turbine 122 through the duct 120 to communicate thereto the partially expanded combustion product flow 42. During operation the compressor turbine 118 partially expands the high-pressure combustion product flow 36, extracts work therefrom, and communicates the work as the high-pressure spool rotation 40 to the air compressor 112 via the high-pressure shaft 116. The compressor turbine 118 also communicates the partially expanded combustion product flow 42 to the power turbine 122 through the duct 120. In certain examples the compressor turbine 118 is fixed in rotation relative to the air compressor 112.

The power turbine 122 is configured to provide mechanical power to the generator 102. In this respect the power turbine 122 is supported for rotation about the rotation axis 30 and is operatively connected to the generator 102. Operative connection is via the generator shaft 124, which connects the power turbine 122 directly to the generator 102 and operatively associates the generator 102 with the high-pressure spool 106 through the power turbine 122. During operation the power turbine 122 receives the partially expanded combustion product flow 42, extracts further work from the partially expanded combustion product flow 42 and communicates the work to the generator 102 as the low-pressure spool rotation 44 via the generator shaft 124. In certain examples the power turbine 122 is fixed in rotation relative to the generator 102. In accordance with certain examples the power turbine 122 can be support for rotation relative to the high-pressure spool 106. It is contemplated that, in certain examples, the duct 120 fluidly couple the power turbine 122 to the high-pressure spool 106.

The generator 102 is configured to convert the low-pressure spool rotation 44 received from the power turbine 122 into electrical power 46. In this respect the generator 102 is connected to the power turbine 122 by the generator shaft 124 to receive the low-pressure spool rotation 44 from the power turbine 122. The generator 102 is also electrically connected to the power converter 126 to communicate thereto the electrical power 46. In accordance with certain examples the generator 102 can include an alternating current (AC) power generator, e.g., the electrical power 46 being AC power. It is also contemplated that the generator 102 can be a 400 hertz AC power generator, which allows the gas turbine engine/generator arrangement 100 to be inserted in vehicles having 400 hertz AC power systems.

The power converter 126 is configured to convert the electrical power 46 provided by the generator 102 into power suitable for the electrical system 12. The power converter 126 is also configured to convert a portion of the electrical power 46 into electrical power 48 (shown in FIG. 2) suitable for the electric motor 108. In this respect the power converter 126 is electrically connected to the generator 102 to receive the electrical power 46. The power converter 126 is also electrically connected to the electrical system 12 to communicate electrical power to electrical loads connected to the electrical system 12, e.g., the first electrical load 14 (shown in FIG. 1) and the second electrical load 16 (shown in FIG. 1), and is additionally connected to the electric motor 108 to communicate thereto the electrical power 48.

It is contemplated that the power converter 126 be operatively associated with the controller 128. The controller 128 is configured to control the direction of work communication, e.g., the motor-to-spool rotation 22 and the spool-to-motor rotation 24, communicated between the electric motor 108 and high-pressure spool 106 by modulating the electrical power 48 communicated to electric motor 108. In certain examples the power converter 126 includes a variable-frequency constant-frequency power converter 130 electrically connecting the generator 102 to the electric motor 108 to power the electric motor 108 using power provided by the generator 102.

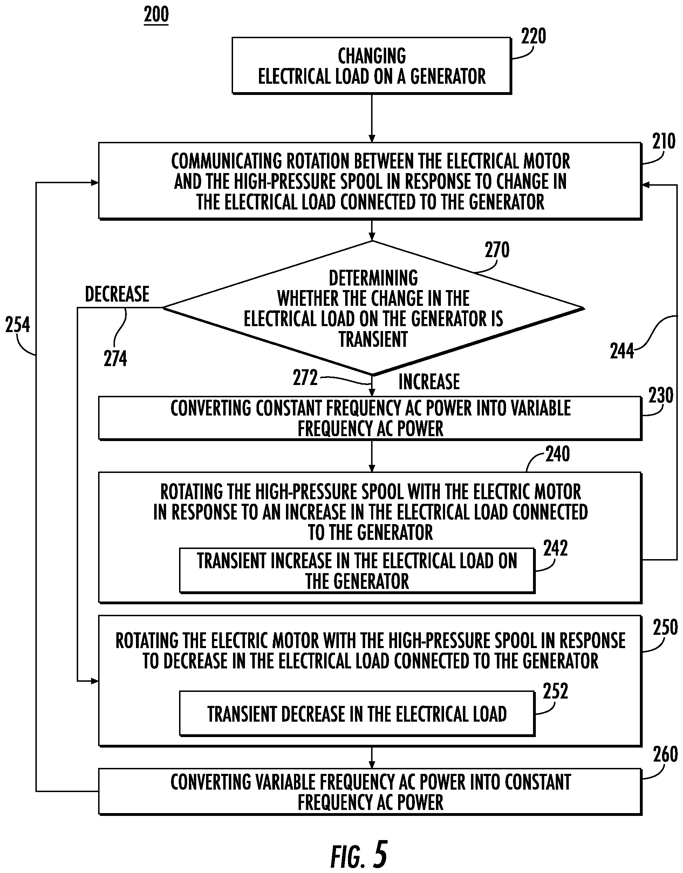

The controller 128 is operatively connected to the electric motor 108 through a link 132 and includes a processor 134, a device interface 136, a memory 138, and user interface 140. The device interface 136 connects the controller 128 with the electric motor 108 through the link 132. The processor 134 is disposed in communication with the device interface 136, the user interface 140, and the memory 138. The memory 138 includes a non-transitory machine-readable medium having a plurality of program modules 142 recorded thereon with instructions that, when read by the processor 134, cause the processor 134 to undertake certain actions. Among those actions are operations of a method 200 (shown in FIG. 5) of generating electric power using the gas turbine engine/generator arrangement 100, as will be described.

The electric motor 108 is configured to apply and receive work, e.g., the motor-to-spool rotation 22 and the spool-to-motor rotation 24, from the high-pressure spool 106 and is operatively associated with the controller 128. In this respect the motor shaft 110 connects the electric motor 108 to the high-pressure spool 106 for communicating the motor-to-spool rotation 22 to the high-pressure spool 106 and receiving the spool-to-motor rotation 24 from the high-pressure spool 106. In certain examples the electric motor 108 is fixed in rotation relative to the air compressor 112. In accordance with certain examples the electric motor 108 is directly connected to the high-pressure spool 106, e.g., without intervening gearing, and/or coaxially supported for rotation about the rotation axis 30 with the high-pressure spool 106, simplifying the arrangement of the gas turbine engine/generator arrangement 100. It is also contemplated that, in certain examples, that the electric motor 108 may be a synchronous electric motor.

It is contemplated that work be communicated between the electric motor 108 and the high-pressure spool 106 during transient intervals, e.g., during relatively short periods of time. In certain examples the time interval during which the motor-to-spool rotation 22 and the spool-to-motor rotation 24 are communicated is on the order of seconds. In accordance with certain examples the time interval during which the motor-to-spool rotation 22 and the spool-to-motor rotation 24 are communicated in on the order of minutes.

The direction of work communicated between the electric motor 108 and the high-pressure spool 106 is selected by the controller 128 according whether a change in the electrical load connected to the generator 102 is a transient increase or a transient decrease. For example, during the electrical load transient increase 26 (shown in FIG. 3) it is contemplated that frequency of AC power communicated to the electric motor 108 by the power converter 126 be increased, the electric motor 108 thereby rotating faster than the high-pressure spool 106 and the electric motor 108 thereby communicating the motor-to-spool rotation 22 to the high-pressure spool 106. Oppositely, during the electrical load transient decrease 28 (shown in FIG. 4) of transient load decrease it is contemplated that frequency of AC power communicated to the electric motor 108 by the power converter 126 be decreased, the electric motor 108 thereby rotating slower than the high-pressure spool 106 and the high pressure spool 106 thereby communicating the spool-to-motor rotation 24. As will be appreciated by those of skill in the art in view of the present disclosure, the spool-to motor rotation 24 accelerates the electrical motor 108, the electric motor 108 storing the spool-to-motor motor rotation 24 as kinetic energy.

It is contemplated that the electric motor 108 have an electric motor power rating 144 (shown in FIG. 2) and that the gas turbine engine/generator arrangement 100 have a gas turbine engine/generator arrangement power rating 146 (shown in FIG. 1). In certain examples the electric motor power rating 144 is lower than that of the gas turbine engine/generator arrangement power rating 146. In accordance with certain examples the electric motor power rating 144 is less than 50% of the gas turbine engine/generator arrangement power rating 146. As will be appreciated by those of skill in the art in view of the present disclosure, sizing the electric motor 108 with an electric motor power rating 144 that is about 50% or less of the gas turbine engine/generator arrangement power rating 146 allows the electric motor 108 to accommodate transient electrical load changes typically experienced by APUs while limiting the size and weight of the electric motor 108.

With reference to FIG. 3, the electric motor 108 is shown rotating the high-pressure spool 106 in response to the electrical load transient increase 26. The electrical load transient increase 26 arises from an increase in the electrical load on the generator 102 through the electrical system 12, e.g., by closing either (or both) the first switch 18 (shown in FIG. 1) and the second switch 20 (shown in FIG. 1). Closing either (or both) the first switch 18 and the second switch 20 connects the first electrical load 14 (shown in FIG. 1) and/or the second electrical load 16 (shown in FIG. 1) connects to the generator 102. The generator 102 therefore needs to increase the electrical power 46, which in turn requires that the power turbine 122 increase the mechanical power that it provides to the generator 102 through the low-pressure spool rotation 44.

Responsive to the electrical load transient increase 26 the gas turbine engine/generator arrangement 100 increases the fuel flow 38 provided to the combustor 114. Increase of the fuel flow 38 causes the combustor 114 to increase the high-pressure combustion product flow 36 provided to the compressor turbine 118 by the combustor 114. The compressor turbine 118 in turn communicates a portion of the increase in the high-pressure combustion products flow 36 to the power turbine as an increase in the partially expanded combustion product flow 42 provided to the power turbine 122. Once the increase in the partially expanded combustion product flow 42 reaches the power turbine 122 the power turbine 122 extracts additional the mechanical work and applies the additional mechanical work to the generator 102 via the low-pressure spool rotation 44, increasing the electrical power 46 output by the generator 102.

In some gas turbine engine/generator arrangements there can be a delay between the time the electrical load increases and when the additional work is applied to the generator. For example, there may initially be insufficient air in the compressed air flow provided to the combustor for the increased fuel flow provided to the combustor. The rate that the fuel flow may be increased may also be limited due to the need to increase the compressed air flow to the combustor. While generally acceptable, the response of the gas turbine engine/generator arrangement to the increase in electrical load may therefore lag the requirement of the increased electrical load for a transient period of time.

To limit (or eliminate entirely) such lags the gas turbine engine/generator arrangement 100 electric motor 108 adds energy to the high-pressure spool 106 through the motor-to-spool rotation 22. Specifically, responsive to the electrical load transient increase 26, the controller 128 (shown in FIG. 2) causes the power converter 126 to apply electrical power 48 to the electric motor 108. The electrical power 48 causes the electric motor 108 to communicate the motor-to-spool rotation 22 to the high-pressure spool 106. The motor-to-spool rotation 22 applied by the electric motor 108 causes the compressor turbine 118 to more quickly communicate an increase in the high-pressure combustion product flow 36 associated with the increase in the fuel flow 38 to the power turbine 122 (and/or increase the mass flow rate of the compressed air flow 34 communicated to the combustor 114). This reduces (or eliminates entirely) the lag between the start of the electrical load transient increase 28 and when the generator 102 responds to the increase in the electrical load with an increase in the electrical power 46 output by the generator 102. It is contemplated that, in certain examples, that the electrical power 48 provided to the electric motor 108 be provided by the generator 102 via the electrical power 46.

With reference to FIG. 4, the high-pressure spool 106 is shown rotating the electric motor 108 in response to the electrical load transient decrease 28. The electrical load transient decrease 28 results from a decrease in the electrical load on the generator 102 from the electrical system 12, e.g., by opening of either (or both) the first switch 18 (shown in FIG. 1) and the second switch 20 (shown in FIG. 1). Opening either (or both) the first switch 18 and the second switch 20 disconnects the first electrical load 14 (shown in FIG. 1) and/or the second electrical load 16 (shown in FIG. 1) from the generator 102. This reduces the amount of electrical power that the generator 102 need provide and allows for decrease in the mechanical power provided to the generator via the low-pressure spool rotation 44.

Responsive to the electrical load transient decrease 28 the fuel flow 38 provided to the combustor 114 is decreased. Decrease in the fuel flow 38 decreases the high-pressure combustion product flow 36 provided to the compressor turbine 118 by the combustor 114. Decrease in the high-pressure combustion product flow 36 in turn reduces the partially expanded combustion product flow 42 communicated by the compressor turbine 118 to the power turbine 122, the power turbine 122 thereby reducing the mechanical work provided to the generator 102 via the low-pressure spool rotation 44. This decreases the electrical power 46 output by the generator 102 commensurate with the decrease in the electrical load on the generator 102.

In some gas turbine engine/generator arrangements the reduction in mechanical work provided to the generator can lag the decrease in electrical load on the generator. For example, kinetic energy resident in either (or both) the rotating high-pressure spool and the low-pressure spool may dissipate at a rate slower than that required to reduce the electrical power output by the generator. Residual compressed air traversing the combustor, compressor turbine, and the power turbine may also delay decrease in the low-pressure spool mechanical rotation. As a consequence, the gas turbine engine/generator arrangement may operate less efficiently than otherwise possible during a transient interval subsequent to reduction in the electrical load on the generator.

To limit (or eliminate entirely) lag between when the electrical load on the generator 102 decreases and reduction in the mechanical work is applied to the generator 102 the high-pressure spool 106 rotates the electric motor 108. Specifically, responsive to the electrical load transient decrease 28, the controller 128 (shown in FIG. 2) decreases the rotational speed of the electric motor 108, e.g., by changing frequency of electrical power 48 provided to the electric motor 108. The decrease in rotational speed of the electric motor 108 cause the high-pressure spool 106 to communicate the spool-to-motor rotation 24 to the electric motor 108, slowing rotation of the high-pressure spool 106. Slowing rotation of the high-pressure spool 106 in turn reduces the mass flow rate of the compressed air flow 34, reducing the high-pressure combustion product flow 36 communicated to the compressor turbine 118 and the partially expanded combustion product flow 42 communicated to the power turbine 118 - reducing the mechanical work applied to the generator 102 by the power turbine 122. This reduces (or eliminates entirely) lag between the start of the electrical load transient decrease 28 and reduction in the amount of mechanical work applied to the generator 102.

With reference to FIG. 5, the method 200 of generating electrical power is shown. The method 200 includes communicating mechanical rotation, e.g., the motor-to-spool rotation 22 (shown in FIG. 1) and/or the spool-to-motor rotation 24 (shown in FIG. 1), between an electric motor, e.g., the electric motor 108 (shown in FIG. 2), and a high-pressure spool, e.g., the high-pressure spool 106 (shown in FIG. 2), as shown with box 210. The mechanical rotation can be applied by the electric motor to the high-pressure spool to accelerate the high-pressure spool to facilitate gas turbine engine start (light-off). The mechanical rotation can also be communicated between the electric motor and the high-pressure spool in response to a change in magnitude of the electrical load carried by a generator operatively associated with the low-pressure spool and the high-pressure spool, e.g., the generator 102 (shown in FIG. 2), as shown with box 220.

It is contemplated that the direction of the mechanical rotation communicated between the electric motor and the high-pressure spool be according to the change in electrical load on the generator. For example, responsive to an increase in electrical load on the generator, the electric motor can communicate the motor-to-spool rotation to the high-speed spool, as shown with box 240. It is contemplated that the time interval during which the electric motor communicates mechanical rotation to the low-pressure spool be transient, as shown with box 242. The electric motor rotation can be provided by increasing frequency of AC power communicated to the electric motor, as shown with box 230. Once the transient change in electrical load passes the motor speed can be adjusted to more closely correspond (or match) speed of the high-pressure spool, as shown with arrow 244.

Responsive to a decrease in electrical load on the generator the high-pressure spool can communicate mechanical rotation to the electric motor, as shown with box 250. It is also contemplated that the time interval during which the high-pressure spool communicates mechanical rotation to the electric motor be transient, as shown with box 252. In certain examples the change in motor speed associated with the mechanical rotation applied by the high-pressure spool be such that the electric motor generate variable frequency AC power, which the power converter 126 (shown in FIG. 2) can communicate to the electrical system 12 (shown in FIG. 1) as constant frequency AC power, as shown with box 260. As above, once the transient passes, the motor speed can be adjusted to more closely correspond (or match) that of the high-pressure spool, as shown with arrow 254.

In certain examples a determination is made as to whether the change in electrical load is transient, as shown with box 270. For example, when the change in the electrical load is determined to be a transient increase in electrical load that cannot be accommodated by the kinetic energy resident in the rotating high-pressure spool, frequency of AC power communicated to the electric motor is increased, as shown with arrow 272. When the change in the electrical load is determined to be a transient decrease in electrical load requiring a decrease in the kinetic energy resident in the rotating high-pressure spool, frequency of AC power communicated to the electric motor is decreased, as shown with arrow 274. This can be done with a load sensor and /or feed forward logic, as suitable for an intended application.

Generators are commonly driven by variable speed gas turbine engines having a single shaft. While generally satisfactory for their intended purpose such gas fluctuation in the electrical load connected to the generators powered by the gas turbine engine can sometimes require adjustment in the output power of the gas turbine engine powering the generator. Transient changes in the electrical load, e.g., that occur in a matter of seconds, can change the operating speed of the single-shaft gas turbine engine.

In examples described herein gas turbine engines having high-pressure spools and low-pressure spools are employed to power the generator. The low-pressure turbine is mechanically connected to the generator for powering the generator. The compressor turbine 118 is rotationally free relative to the power turbine 122, is operably connected to the power turbine 122, and is mechanically connected to an electric motor, which is powered by the generator. The electric motor is arranged to assist the high-pressure spool and is thereby able to increase the power output of the low-pressure spool when required. Increase in power output of the compressor turbine 118 in turn increases power output of the power turbine 122, more output power thereby being available for application to the generator.

In accordance with certain examples, the electric motor serves as an energy storage device akin to a flywheel. More specifically, the inertia energy of the compressor can be charged and discharged by varying rotational speed of the compressor with the electric motor directly connected to the compressor. It is contemplated that the electric motor can be an induction motor, a permanent magnet generator brushless motor, or a wound field electric motor fed powered by the generator and fed by an inverter connecting the generator to the electric motor. It is contemplated that the electric motor be directly connected to the high-pressure spool, e.g., without step-up gear train. It is also contemplated that the rated power of the electric motor be less than about 50% of the rated power of the gas turbine engine.

Technical effects of the present disclosure include the capability to quickly respond to sudden change in electrical load connected to the generator, i.e. fast transients. Technical effects of the present disclosure also allow the high-speed rotation of the high-pressure spool and electric motor to be stored or delivered through the power converter connecting the generator to the electric motor, the power converter controlling the electric motor as a flywheel via AC-AC solid state power electronics. Technical effects of the present disclosure additionally include the capability to more closely match output power to the gas turbine engine to the electrical load connected to the generator, e.g., within seconds instead of minutes.

The term "about" is intended to include the degree of error associated with measurement of the particular quantity based upon the equipment available at the time of filing the application.

The terminology used herein is for the purpose of describing particular examples only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary example or examples, it will be understood by those skilled in the art that various changes may be made and equivalents may be substituted for elements thereof without departing from the scope of the invention as defined by the claims. In addition, many modifications may be made to adapt a particular situation or material to the teachings of the present disclosure without departing from the scope of the invention. Therefore, it is intended that the present disclosure not be limited to the particular example disclosed as the best mode contemplated for carrying out this present disclosure, but that the present disclosure will include all examples falling within the scope of the claims.

## Claims

1. A gas turbine engine/generator arrangement, comprising:
a generator (102);
a low-pressure spool (104) operably connected to the generator;
a high-pressure spool (106) operably connected to the low-pressure spool; and
an electric motor (108) mechanically connected to the high-pressure spool and electrically connected to the generator to communicate mechanical rotation between the electric motor and the high-pressure spool.

2. The gas turbine engine/generator arrangement of claim 1, wherein the generator is an alternating current generator, and optionally wherein the generator is a 400 hertz alternating current generator.

3. The gas turbine engine/generator arrangement of claim 1 or 2, wherein the high-pressure spool includes an air compressor (112), wherein the electric motor is fixed in rotation relative to the air compressor, and optionally wherein the high-pressure spool includes a compressor turbine (118), wherein the electric motor is fixed in rotation relative to the compressor turbine and/or wherein the high-pressure spool comprises a combustor (114), the combustor fluidly coupled to the air compressor.

4. The gas turbine engine/generator arrangement of any preceding claim, wherein the low-pressure spool comprises a power turbine (122), the power turbine fixed in rotation relative to the generator.

5. The gas turbine engine/generator arrangement of claim 4, wherein the power turbine is supported for rotation relative to the high-pressure spool.

6. The gas turbine engine/generator arrangement of claim 4 or 5, further comprising a duct (120) fluidly coupling the power turbine to the high-pressure spool.

7. The gas turbine engine/generator arrangement of any preceding claim, further comprising a variable-frequency constant-frequency power converter (130) electrically connecting the generator to the electric motor.

8. The gas turbine engine/generator arrangement of any preceding claim, wherein the gas turbine engine/generator arrangement is an auxiliary power unit for an aircraft.

9. The gas turbine engine/generator arrangement of any preceding claim, wherein the electric motor is a synchronous electrical machine and/or wherein the electric motor is fixed in rotation relative to the high-pressure spool.

10. The gas turbine engine/generator arrangement of any preceding claim, further comprising a controller (128) operably connected to the electric motor and responsive to instructions recorded on a memory to:
rotate the high-pressure spool with the electric motor in response to increase in an electrical load on the generator; and
rotate the electric motor with the high-pressure spool in response to decrease in the electrical load on the generator.

11. The gas turbine engine/generator arrangement of claim 10, wherein the increase in the electrical load is a transient increase in the electrical load and/or wherein the decrease in the electrical load on the generator is a transient decrease in the electrical load.

12. The gas turbine engine/generator arrangement of any preceding claim, wherein the electric motor has an electric motor power rating, wherein the gas turbine engine/generator arrangement has a gas turbine engine/generator arrangement power rating, and wherein the electric motor power rating is less than about 50% of the gas turbine engine/generator arrangement power rating.

13. The gas turbine engine/generator arrangement of claim 9, wherein the electric motor is fixed in rotation relative to the high-pressure spool, further comprising a controller operably connected to the electric motor and responsive to instructions recorded a memory to:
rotate the high-pressure spool with the electric motor to accelerate the high-pressure spool to facilitate gas turbine engine start (light-off);
rotate the high-pressure spool with the electric motor in response to increase in an electrical load connecting to the generator; and
rotate the electric motor with the high-pressure spool in response to the decrease in the electrical load connected to the generator.

14. A method of generating electric power, comprising:
at a gas turbine engine/generator arrangement including a generator, a low-pressure spool operably connected to the generator, a high-pressure spool operably connected to the low-pressure spool, and an electric motor mechanically connected to the high-pressure spool and electrically connected to the generator,
communicating rotation between the electric motor and the high-pressure spool.

15. The method of claim 14, further comprising:
rotate the high-pressure spool with the electric motor to accelerate the high-pressure spool to facilitate gas turbine engine start (light-off);
rotating the high-pressure spool with the electric motor in response to an increase in an electrical load connected to the generator, wherein the increase in the electrical load is a transient increase in the electrical load; and
rotating the electric motor with the high-pressure spool in response to decrease in the electrical load connected to the generator, wherein the decrease in the electrical load on the generator is a transient decrease in the electrical load.
